(19) Europäisches Patentamt
European Patent Office
Office européen des brevets

(11) **EP 4 202 680 A1**

(12) **EUROPEAN PATENT APPLICATION**

(43) Date of publication:
**28.06.2023 Bulletin 2023/26**

(21) Application number: **22214447.9**

(22) Date of filing: **19.12.2022**

(51) International Patent Classification (IPC):
**G06F 9/50** *(2006.01)* **G06N 3/098** *(2023.01)*

(52) Cooperative Patent Classification (CPC):
**G06F 9/5027; G06N 3/098**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.12.2021 CN 202111612377**

(71) Applicant: **BEIJING BAIDU NETCOM SCIENCE AND TECHNOLOGY CO. LTD.**
**100085 Beijing (CN)**

(72) Inventors:
• **LIU, Ji**
**Beijing, 100085 (CN)**

• **ZHANG, Hong**
**Beijing, 100085 (CN)**
• **JIA, Juncheng**
**Beijing, 100085 (CN)**
• **ZHOU, Ruipu**
**Beijing, 100085 (CN)**
• **DOU, Dejing**
**Beijing, 100085 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **DISTRIBUTED MACHINE LEARNING METHOD AND SYSTEM, SERVER, DEVICE AND STORAGE MEDIUM**

(57) The present disclosure provides a distributed machine learning method and system, a server, a device and a storage medium, and relates to the field of artificial intelligence technologies, such as machine learning technologies, or the like. An implementation includes: acquiring, based on delay information, an optimal scheduling queue of a plurality of edge devices participating in training; and scheduling each edge device of the plurality of edge devices to train a machine learning model based on the optimal scheduling queue of the plurality of edge devices. The present disclosure may effectively improve a distributed machine learning efficiency.

acquiring, based on delay information, an optimal scheduling queue of a plurality of edge devices participating in training — S101

scheduling each edge device of the plurality of edge devices to train a machine learning model based on the optimal scheduling queue of the plurality of edge devices — S102

**Fig. 1**

EP 4 202 680 A1

**Description**

**TECHNICAL FIELD**

The present disclosure relates to the field of computer technologies, particularly to the field of artificial intelligence technologies, such as machine learning technologies, or the like, and more particularly to a distributed machine learning method and system, a server, a device and a storage medium.

**BACKGROUND**

With a rapid development of artificial intelligence technologies, a deep learning technology, as one of the most important artificial intelligence technologies, requires huge data as a basis. In addition, various existing terminal devices, such as smart phones, smart tablets, smart watches, or the like, collect a large amount of data while operated conveniently, and the data is quite attractive to the deep learning technology. In a traditional machine learning technology, data on the terminal device is collected, and then used for training intensively, thereby bringing huge threats to privacy of the data on the terminal device.

A federated learning technology is a distributed machine learning technology, and is different from a prior machine learning technology in that, in the federated learning technology, the user data on the terminal device is not required to be collected, but retained locally. A machine learning model is trained locally on the terminal device, and the trained machine learning model is uploaded to a server. In this way, the data is retained locally, and privacy safety of the user data may be effectively guaranteed.

**SUMMARY**

The present disclosure provides a distributed machine learning method and system, a server, a device and a storage medium.

According to one aspect of the present disclosure, there is provided a distributed machine learning method, including:

acquiring, based on delay information, an optimal scheduling queue of a plurality of edge devices participating in training; and
scheduling each edge device of the plurality of edge devices to train a machine learning model based on the optimal scheduling queue of the plurality of edge devices.

According to another aspect of the present disclosure, there is provided a server, including:

a queue acquiring module configured to acquire, based on delay information, an optimal scheduling queue of a plurality of edge devices participating in training; and
a scheduling module configured to schedule each edge device of the plurality of edge devices to train a machine learning model based on the optimal scheduling queue of the plurality of edge devices.

According to still another aspect of the present disclosure, there is provided a distributed machine learning system including a server and a plurality of edge devices; the server being connected with each edge device communicatively; and the server being the server according to the aspect as described above and any possible implementation.

According to yet another aspect of the present disclosure, there is provided an electronic device, including:

at least one processor; and
a memory connected with the at least one processor communicatively;
where the memory stores instructions executable by the at least one processor to enable the at least one processor to perform the method of the aspect as described above and any possible implementation.

According to another aspect of the present disclosure, there is provided a non-transitory computer readable storage medium with computer instructions stored thereon, where the computer instructions are used for causing a computer to perform the method of the aspect as described above and any possible implementation.

According to another aspect of the present disclosure, there is provided a computer program product including a computer program which, when executed by a processor, implements the method of the aspect as described above and any possible implementation.

The technology according to the present disclosure may effectively improve a distributed machine learning efficiency.

It should be understood that the statements in this section are not intended to identify key or critical features of the embodiments of the present disclosure, nor limit the scope of the present disclosure. Other features of the present disclosure will become apparent from the following description.

## BRIEF DESCRIPTION OF THE DRAWINGS

The drawings are used for better understanding the present solution and do not constitute a limitation of the present disclosure. In the drawings,

Fig. 1 is a schematic diagram according to a first embodiment of the present disclosure;
Fig. 2 is a schematic diagram according to a second embodiment of the present disclosure;
Fig. 3 is a schematic diagram according to a third embodiment of the present disclosure;
Fig. 4 is a working principle diagram of a distributed system according to the present disclosure;
Fig. 5 is a schematic diagram according to a fourth embodiment of the present disclosure;
Fig. 6 is a schematic diagram according to a fifth embodiment of the present disclosure;
Fig. 7 is a schematic diagram according to a sixth embodiment of the present disclosure; and
Fig. 8 is a block diagram of an electronic device configured to implement the above-mentioned method according to the embodiment of the present disclosure.

## DETAILED DESCRIPTION OF EMBODIMENTS

The following part will illustrate exemplary embodiments of the present disclosure with reference to the drawings, including various details of the embodiments of the present disclosure for a better understanding. The embodiments should be regarded only as exemplary ones. Therefore, those skilled in the art should appreciate that various changes or modifications can be made with respect to the embodiments described herein without departing from the scope and spirit of the present disclosure. Similarly, for clarity and conciseness, the descriptions of the known functions and structures are omitted in the descriptions below.

Apparently, the embodiments to be described are merely a part rather than all of the embodiments of the present disclosure. All other embodiments obtained by a person of ordinary skill in the art based on the embodiments of the present disclosure without creative efforts shall fall within the protection scope of the present disclosure.

It should be noted that a terminal device in the embodiments of the present disclosure may include, but is not limited to, a mobile phone, a personal digital assistant (PDA), a wireless handheld device, a tablet computer, and other smart devices; a display device may include, but not limited to, a personal computer, a television, and other devices with a display function.

In addition, the term "and/or" only describes an association relationship between associated objects, and indicates that three relationships may exist. For example, A and/or B may indicate three cases: only A exists; both A and B exist; and only B exists. In addition, in this specification, the symbol "j" generally indicates that associated objects have a relationship of "or".

In a distributed machine learning architecture based on federated learning, one server and a plurality of terminal devices (e.g., several terminal device) may be involved to train a machine learning model. The plurality of terminal devices are located at a periphery of the server and may also be referred to as a plurality of edge devices. The server may control the plurality of edge devices to train the machine learning model, and the trained machine learning model is uploaded to the server.

In prior art, in each round of training, the server may schedule the edge devices successively to train the machine learning model using data on the edge devices according to a location order of the edge devices, or according to a descending order or an ascending order of identifiers of the edge devices. Usually, each edge device has limited resources, such as a battery, a network, computing power, or the like. Different edge devices may have great performance differences, such that there may exist a phenomenon that in a same round of training, a fast edge device may finish training quite early while a slow edge device may still perform training, and a speed of a current round of training is reduced eventually, resulting in a low federated learning efficiency.

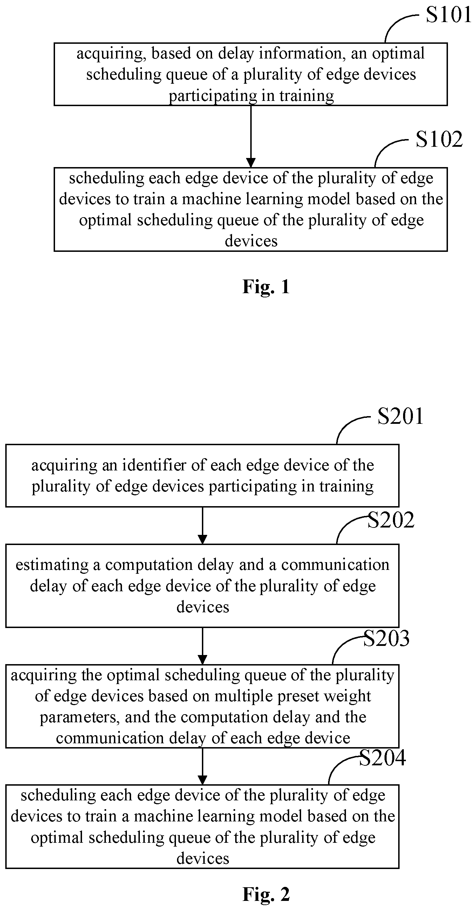

Fig. 1 is a schematic diagram according to a first embodiment of the present disclosure; as shown in Fig. 1, this embodiment provides a distributed machine learning method, which may be applied to a server side of a distributed machine learning system and include the following steps:

S101: acquiring, based on delay information, an optimal scheduling queue of a plurality of edge devices participating in training; and
S102: scheduling each edge device of the plurality of edge devices to train a machine learning model based on the optimal scheduling queue of the plurality of edge devices.

For example, the distributed machine learning system according to this embodiment may refer to a federated learning system. The system may include a server and a plurality of edge devices distributed around the server. Certain data resources are collected on each edge device, and the machine learning model may be trained using the data resources.

In federated learning, the server may control the plurality of edge devices to perform multiple rounds of learning on the machine learning model. The technical solution of this embodiment may be applied to a scenario where the server controls the plurality of edge devices to perform each round of learning.

For example, in each round of learning, the server may acquire the optimal scheduling queue of the plurality of edge devices participating in training based on the delay information. In other words, in the optimal scheduling queue, a scheduling order of the plurality of edge devices participating in training in the current round of training is defined. In this embodiment, the scheduling order of the plurality of edge devices defined in the optimal scheduling queue is acquired neither based on an order of physical locations of the plurality of edge devices nor based on an ascending order of identifiers of the plurality of edge devices, but is acquired by referring to performance, such as a delay, of the plurality of edge devices, thereby guaranteeing rationality of the optimal scheduling queue. Then, when the server schedules the plurality of edge devices for machine learning based on the optimal scheduling queue, a scheduling efficiency may be effectively improved.

In the distributed machine learning method according to this embodiment, the optimal scheduling queue of the plurality of edge devices participating in training is acquired based on the delay information, thereby effectively guaranteeing the rationality of the optimal scheduling queue. Then, based on the optimal scheduling queue, each edge device of the plurality of edge devices is scheduled to train the machine learning model, thus effectively improving the scheduling efficiency in distributed machine learning, and then improving a distributed machine learning efficiency. For example, when the method is applied to federated learning, a federated learning efficiency may be effectively improved.

Fig. 2 is a schematic diagram according to a second embodiment of the present disclosure; as shown in Fig. 2, the technical solution of the distributed machine learning method according to this embodiment of the present disclosure is further introduced in more detail based on the technical solution of the above-mentioned embodiment shown in Fig. 1. As shown in Fig. 2, the distributed machine learning method according to this embodiment may include the following steps:

S201: acquiring an identifier of each edge device of a plurality of edge devices participating in training.

The technical solution according to this embodiment may be applied to each round of training in distributed machine learning. Specifically, in each round of training, the acquired identifiers of the edge devices participating in training may be evaluated and specified by a worker. Alternatively, the identifiers may be acquired by the server from all candidate edge devices based on certain rules. Either way, accuracy of the plurality of edge devices participating in training has to be ensured.

In a distributed machine learning scenario of this embodiment, the server and the edge devices are communicated directly, and not required to be indirectly communicated through other gateway nodes. The server may have a function of a base station, and each edge device is similar to a mobile terminal, such that the server may be communicated with each edge device directly.

In this embodiment, in order to improve the distributed learning efficiency, a communication distance between the server and each edge device is not greater than a preset distance threshold. The preset distance threshold may be selected based on experience, such as 1km, 800m, 600m or other distance values, which is not limited herein.

S202: estimating a computation delay and a communication delay of each edge device of the plurality of edge devices.

In this embodiment, when the scheduling queue is acquired, a machine learning model is not trained formally using each edge device, such that the computation delay and the communication delay of each edge device may not be acquired really, and are estimated with an estimation method.

The computation delay of each edge device in this embodiment may refer to duration consumed by each edge device training the machine learning model using a local data set in a current round of training.

The communication delay of each edge device may include time duration consumed by each edge device downloading the machine learning model and time duration consumed by each edge device uploading the machine learning model.

In a distributed machine learning process, in order to improve a learning efficiency, the server may send merely parameters of the machine learning model to each edge device participating in training in the learning process, and each edge device may upload merely the parameters of the machine learning model to the server after each round of training is completed. Therefore, the communication delay of each edge device correspondingly includes duration consumed by each edge device downloading global parameters of the machine learning model and duration consumed by each edge device uploading local parameters of the machine learning model.

In order to represent randomness of the computation delay of the edge device updating the machine learning model, in this embodiment, a computation delay of an ith edge device in a kth round of training may be acquired using shifted exponential distribution:

$$\mathbb{P}[t_{i,k}^{cp} < t] = \begin{cases} 1 - e^{-\frac{\mu_i}{\tau d_i}(t - a_i \tau d_i)}, & t \geq a_i \tau d_i, \\ 0, & \text{otherwise,} \end{cases}$$

$$(1)$$

where $t_{i,k}^{cp}$ represents the computation delay of the ith edge device in the kth round of training. P[ ] represents shifted distribution. $\tau$ represents a number of local iterations in the current round of training, and the number of the local iterations specifically refers to a number of gradient descents performed locally at the edge device. In one round of training, the selected edge device may perform multiple gradient descents to minimize a loss function on the local data set of the edge device. For example, in this embodiment, $\tau$=5, 6, 8 or other values, which is not limited herein. $d_i$ is a local batch size of the ith edge device. Specifically, in each time of training, a batch of data is used for training, and the local batch size refers to a quantity of data in a batch of data used in one time of training; for example, in this embodiment, $d_i$ may be 80, 100, 120 or other values, which is not limited herein. $a_i > 0$ and $\mu_i > 0$ of the ith edge device represent a maximum value and fluctuation of computing power respectively. In this embodiment, it is assumed that $a_i > 0$ and $\mu_i > 0$ are constant in the whole training process.

Values of $a_i$ and $\mu_i$ in this embodiment may be calculated according to a frequency of a CPU, a multiply-accumulate (MAC) operation performed in each CPU cycle, and a computation quantity of the machine learning model. For different CPUs and different models, values may be different, and the values are fixed after certain setting is adopted.

For example, in a usage scenario of a certain edge device, it is assumed that the maximum frequency of one CPU is 1GHz/s, and 8 MAC operations may be processed in each CPU cycle. A locally updated batch size is d=100, $\tau$=5. For a specified data set, such as cifar10, and a specified machine learning model, such as AlexNet, there exist 710 millions of MAC operations per gradient descent. Therefore, a=88.8 ms/sample, and $\mu$=1/a. Then, according to a distribution condition of the shifted exponential distribution of the formula (1), the computation delay of the edge device may be simulated and calculated.

For downloading and uploading phases of the machine learning model of each edge device, in this embodiment, the edge devices and the server may be considered to form a communication system with a total bandwidth of B. An achievable downloading rate of the ith edge device may be represented as $r_{i,k} = Blog_2\left(1 + \frac{P_0 h_{i,k}^2}{BN_0}\right)$, where $P_0$ represents transmission power of the server, $h_{i,k}$ represents a channel gain from the server to the ith edge device in a kth round of training, and $N_0$ represents a noise power density. Therefore, a downloading delay of the ith edge device may be represented as

$$t_{i,k}^{cm} = \frac{R}{r_{i,k}},$$

$$(2)$$

where R represents the size of parameter $w_{i,k}$ of the machine learning model downloaded by the ith edge device in the kth round of training, and a unit is bit. Actually, the parameters of the machine learning model downloaded by each corresponding edge device at this point are global parameters of the machine learning model; that is, the global parameters of the machine learning models downloaded by the edge devices have same sizes.

Similarly, an uploading rate of the ith edge device may be represented as $r_{i,k}' = Blog_2(1 + \frac{P_i h_{i,k}'^2}{BN_0})$, where $P_i$ represents transmission power of the ith edge device, and $h_{i,k}'$ represents a channel gain from the ith edge device to the server in the kth round of training. Thus, an uploading delay of the ith edge device in the kth round of training may be represented as

$$t_{i,k}^{cm'} = \frac{R}{r'_{i,k}},$$ (3)

S203: acquiring the optimal scheduling queue of the plurality of edge devices based on multiple preset weight parameters, and the computation delay and the communication delay of each edge device.

In this embodiment, the multiple preset weight parameters are used to balance the computation delay and the communication delay of each edge device. That is, the multiple weight parameters in this embodiment have a range of [0, 1]. The weight parameters of 0 and 1 represent long computation priority scheduling and short communication priority scheduling respectively. Specifically, a number of the weight parameters may be set according to actual requirements; for example, 1000, 500 or another number of weight parameters may be uniformly set between 0 and 1, which is not limited herein.

In this embodiment, the optimal scheduling queue of the plurality of edge devices may be acquired by comprehensively considering the weight parameters, and the computation delay and the communication delay of each edge device. That is, the optimal scheduling queue in this embodiment is a most reasonable and optimal scheduling queue acquired after the computation delay and the communication delay of each edge device are balanced.

The steps S202 to S203 may be an implementation of the step S101 in the embodiment shown in Fig. 1.

S204: scheduling each edge device of the plurality of edge devices to train the machine learning model based on the optimal scheduling queue of the plurality of edge devices.

In the distributed machine learning method according to this embodiment, the computation delay and the communication delay of each edge device of the plurality of edge devices are estimated, and balanced based on the multiple preset weight parameters, and the optimal scheduling queue of the plurality of edge devices is acquired, thereby further effectively guaranteeing the rationality of the optimal scheduling queue . Then, when each edge device of the plurality of edge devices is scheduled to train the machine learning model based on the optimal scheduling queue, the scheduling efficiency in distributed machine learning may be improved effectively, and then, the distributed machine learning efficiency may be improved.

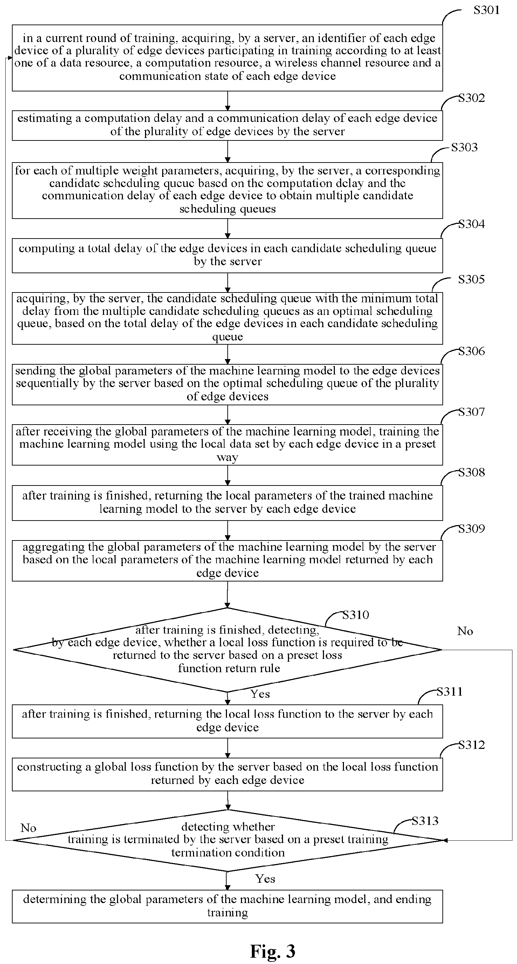

Fig. 3 is a schematic diagram according to a third embodiment of the present disclosure; as shown in Fig. 3, the technical solution of the distributed machine learning method according to this embodiment of the present disclosure is further introduced in more detail based on the technical solutions of the above-mentioned embodiments. As shown in Fig. 3, the distributed machine learning method according to this embodiment may include the following steps:
S301: in a current round of training, acquiring, by a server, an identifier of each edge device of a plurality of edge devices participating in training according to at least one of a data resource, a computation resource, a wireless channel resource and a communication state of each edge device.

In one embodiment of the present disclosure, preferably, the identifier of each of the plurality of edge devices participating in training is acquired by the server according to all of the data resource, the computation resource, the wireless channel resource, and the communication state of each edge device, thereby guaranteeing accuracy of the acquired identifiers of the edge devices participating in training.

For example, in this embodiment, a distributed machine learning system including one server and N edge devices is considered. The machine learning model issued by the server may be trained by each edge device using a local data set, and local parameters of the trained machine learning model uploaded by all the edge devices participating in training are aggregated by the server to obtain aggregated global parameters. The aggregated global parameters of the machine learning model are issued to the edge devices participating in the next round of training, such that the edge devices receiving the global parameters of the machine learning model continue to perform the next round of training.

It is assumed that the edge device k has data set $\mathcal{D}_k = \{x_{k,j}, y_{k,j}\}_{j=1}^{n_k}$, $n_k = |\mathcal{D}_k|$ representing a data quantity of data set $\mathcal{D}_i$ . Here, $x_{k,j}$ represents ith input data, i.e., sample data, of a kth edge device, and $y_{k,j}$ represents a label of $x_{k,j}$. An overall data set may be represented as $\mathcal{D} = \cup_{k \in N} \mathcal{D}_k$, and a total number of samples is $n = \sum_{k=1}^{N} n_k$ .

Training aims at finding parameter w of the machine learning model to minimize a loss function on the overall data set, and an optimal target may be represented as follows:

$$\min_{w} \left\{ F(w) \triangleq \frac{1}{n} \sum_{k \in N} n_k F_k(w) \right\}$$

where $F_k(w) \triangleq \frac{1}{n_k} \sum_{\{x_{k,j}, y_{k,j}\} \in \mathcal{D}_k} f(w, x_{k,j}, y_{k,j})$ is a local loss function, and loss function f(w, $x_{k,j}$, $y_{k,j}$) is used for measuring an error of the parameter w of the machine learning model on data pair {$x_{k,j}$, $y_{k,j}$}.

S302: estimating a computation delay and a communication delay of each edge device of the plurality of edge devices by the server.

For details of this step, reference may be made to S202 in the above-mentioned embodiment with reference with Fig. 2.

S303: for each of multiple weight parameters, acquiring, by the server, a corresponding candidate scheduling queue based on the computation delay and the communication delay of each edge device to obtain multiple candidate scheduling queues.

S304: computing a total delay of the edge devices in each candidate scheduling queue by the server.

S305: acquiring, by the server, the candidate scheduling queue with the minimum total delay from the multiple candidate scheduling queues as an optimal scheduling queue, based on the total delay of the edge devices in each candidate scheduling queue.

Since a synchronous aggregation process is performed during federated learning, total delay $t_k^{\text{round}}(\Pi_k)$ in each round of training is determined by the slowest edge device in all scheduled edge devices, and the following formula exists:

$$t_k^{\text{round}}(\Pi_k) \geq \max_{i \in \Pi_k} \{t_{i,k}^{cm} + t_{i,k}^{cp} + t_{i,k}^{cm'}\}. \tag{4}$$

where $\Pi_k$ identifies a set of the edge devices in the current round pf training.

In this embodiment, if set $\Pi_k$ of all the edge devices scheduled in one round is given, the finallyacquired optimal scheduling queue is the queue with the minimum total delay; that is, an acquiring process of the optimal scheduling queue is a process of minimizing duration $t_k^{\text{round}}(\Pi_k)$ of one round of training.

In addition, after receiving the local parameters of the machine learning model uploaded by each edge device, the server aggregates the local parameters of the machine learning model of each edge device to obtain the global parameters of the machine learning model. Since the server has relatively large computing power and low computation complexity of aggregation, the computation delay of aggregation may be ignored in this embodiment.

For example, if set $\Pi_k$ of the edge devices scheduled in a kth round is given, in order to find optimal scheduling queue $S_k$ about $\Pi_k$, parameters of the machine learning model are downloaded according to an order of $S_k$ to minimize total delay $t_k^{\text{round}}$.

In order to avoid loss of generality, an expression is simplified by ignoring parameter k, {1,2, $\cdots$ , n} is represented using [n] , and there exists S = ($s_1$, $\cdots$ , $s_i$, $\cdots$ , $s_n$) . Optimization problem

$$\mathcal{P}_0$$

for determining optimal scheduling queue $S_k$ may be represented as:

$$\min_{\mathcal{S}} \quad t_{\mathcal{S}}^{\text{round}}(\Pi)$$

$$s.t. \quad t_{\mathcal{S}}^{\text{round}}(\Pi) = \max_{s_i \in \mathcal{S}}\{t_{s_i}^{w} + t_{s_i}^{cm} + t_{s_i}^{cp} + t_{s_i}^{w'} + t_{s_i}^{cm'}\},$$

$$\text{(C1.1)}$$

$$t_{s_i}^{w} = \begin{cases} 0 & , \quad i = 1 \\ \sum_{j=1}^{i-1} t_{s_j}^{cm} & , \quad i > 1 \end{cases} \quad \text{(C1.2)}$$

$$t_{s_{i-1}}^{w} + t_{s_{i-1}}^{cm} \le t_{s_i}^{w} \qquad \forall i \in [n], i > 1 \quad \text{(C1.3)}$$

$$\Pi \subset \mathcal{M} \qquad \text{(C1.4)} \qquad \qquad (5)$$

where $t_{s_i}^{w}$ is waiting time before a $s_i$th edge device downloads the parameters of the machine learning model, and $t_{s_i}^{cm}$ and $t_{s_i}^{cm'}$ are downloading time and uploading time of the parameters of the machine learning model of the $s_i$th edge device respectively. $t_{s_i}^{cp}$ is computation time for training the machine learning model, and $t_{s_i}^{w'}$ is waiting time before the $s_i$th edge device uploads the machine learning model.

Since in this embodiment, minimization of time of one round of training is focused without considering a device scheduling problem among multiple rounds, that is, a scheduling strategy with a given federated learning protocol is followed, a convergence property may not be changed.

First, an influence of local computation time is researched. In order to simplify problem

$$\mathcal{P}_0,$$

it is assumed that all edge devices have to wait for other edge devices to complete training before uploading the parameters of the machine learning model. Since total uploading time of the machine learning model is the sum of uploading time of the edge devices, the time is fixed. Therefore, the time for downloading the parameters of the machine learning model and the local computation time are only required to be reduced as much as possible. This simplified problem is referred to as

$$\mathcal{P}_1.$$

A greedy scheduling strategy may be provided for

$$\mathcal{P}_1,$$

and an optimal solution may be obtained by the scheduling strategy. All the edge devices are ordered by the scheduling strategy according to a descending order of the computation time, and then, the edge devices download the global parameters of the machine learning model according to the order. In this embodiment, the greedy scheduling is referred to as long computation priority scheduling, and it is proved that an optimal solution of problem

$$\mathcal{P}_1$$

may be obtained by the scheduling.

In addition, in order to research an influence of communication time and simplify problem

$$\mathcal{P}_0$$

to eliminate an influence of a local computation user, a simplified problem is called

$$\mathcal{P}_2.$$

It is assumed that all the edge devices have same local training time which is long enough that all the edge devices may complete a downloading process of the parameters of the machine learning model. That is, when a communication channel is not occupied, each edge device which completes local training immediately uploads the local parameters of the machine learning model trained by the edge device. Based on this, this embodiment provides a greedy scheduling strategy, and an optimal solution of

$$\mathcal{P}_2$$

may be obtained by the scheduling strategy when the downloading time and the uploading time are similar. All the edge devices are ordered by the scheduling strategy according to an ascending order of the model downloading time. In this embodiment, the greedy scheduling is referred to as short communication priority scheduling. In this embodiment, it may be proved that the optimal solution of problem

$$\mathcal{P}_2$$

may be obtained by the scheduling algorithm under a specific condition.

In this embodiment, for original problem

$$\mathcal{P}_0,$$

balance between communication and computing power in scheduling of each edge device is researched. In an initial system model, the edge devices have different computing power, and in one round of training, all the selected edge devices are required to participate in final parameter aggregation of the machine learning model, and therefore required to complete downloading, training and uploading processes. Although in this embodiment, with the above method, the optimal solutions may be provided for simplified problems

$$\mathcal{P}_1$$

and

$$\mathcal{P}_2,$$

it is difficult to find an efficient algorithm to find an optimal solution of original problem

$$\mathcal{P}_0.$$

If a brute force solution algorithm is used, assuming that n edge devices participate in one round of training, time complexity of computing scheduling of the edge device is O(n!), which is impractical.

Based on this, this embodiment provides a heuristic algorithm, and based on the two special cases discussed above, for simplified problems

$$\mathcal{P}_1$$

and

$$\mathcal{P}_2,$$

the weight parameters are used for balance between the communication and computing power. According to each weight parameter candidate value $\alpha$, a scheduling queue formed by the plurality of edge devices in a priority order may be obtained, and total consumed time required by the plurality of edge devices in the scheduling queue in one round is calculated by simulation. Then, from multiple different scheduling queues corresponding to the multiple weight parameters, the best queue is selected as the optimal scheduling queue.

In this embodiment, the edge devices which require long-time computation but do not excessively occupy the communication channel may perform computation preferentially, thereby improving an overall training efficiency. Meanwhile, the two special cases of short communication priority scheduling and long computation priority scheduling are considered and correspond to the weight parameters $\alpha = 0$ and $\alpha = 1$ respectively, which may be used as a basic option.

Based on the above, during specific implementation, the step S303 may include the following steps:

(1) for each weight parameter, computing a priority number of each edge device based on the computation delay and the communication delay of each edge device; and
(2) ranking the identifiers of the plurality of edge devices based on the priority number of each edge device, to obtain the candidate scheduling queue corresponding to the weight parameter.

For example, the identifiers of the plurality of edge devices may be arranged according to a descending order of the corresponding priority numbers to obtain the candidate scheduling queue corresponding to the weight parameter. The candidate scheduling queues corresponding to the weight parameters are obtained with the method, the computation delay and the communication delay of each edge device may be ensured to be balanced in each obtained candidate scheduling queue, parallelism of computation and communication is allowed, and system resources may be fully utilized.

For each weight parameter, the corresponding candidate scheduling queue may be acquired according to the above steps (1) to (2), and multiple candidate scheduling queues may be acquired in total.

Specifically, the process may be implemented using the following algorithms:
algorithm 1:

$\Pi_k$ is a set of the edge devices selected in the kth round, and A is a set of weight parameter $\alpha$ values determined experimentally. The edge device is indexed by i, and the weight parameter $\alpha$ is indexed by j.
Require: selected edge device set $\Pi_k$ and weight parameter $\alpha$ value set
for $\alpha_j$ in do
for $d_i$ in $\Pi_k$ do

$$p_{d_i} = \alpha_j * t_{d_i}^{cp} - (1 - \alpha_j) t_{d_i}^{cm}$$

end for

The edge device identifiers in edge device set $\Pi_k$ are ranked according to $p_{d_i}$ in a non-ascending order to obtain

$$\mathcal{S}(\alpha_j);$$

the total consumed time of

$$\mathcal{S}\left(\alpha_j\right)$$

is calculated using algorithm 2;
end for

$$T_{min} = \min_{1 \leq j \leq n} T_j$$

, and

$$\mathcal{S} = \mathcal{S}\left(\alpha_j\right)$$

return
algorithm 2 is as follows:
total cycle time of the determined scheduling queue in algorithm 1 is calculated.

$$\mathcal{S}(\alpha)$$

is the scheduling queue of the edge devices determined in the above algorithm, and n is the size of the scheduling queue

$$\mathcal{S}(\alpha),$$

i.e., a number of the edge devices included in the scheduling queue; $t^{finish}$ is the time required before the edge device uploads the parameters of the machine learning model. The finally-obtained total consumed time of the scheduling queue may be represented as $t_{total}$.

Require: scheduling queue

$$\mathcal{S}(\alpha)$$

of the selected edge devices

for i=1 to n do

if i==1 then

$$t_{s_i}^{finish} = t_{s_i}^{cm} + t_{s_i}^{cp}$$

else

$$t_{s_i}^{finish} = t_{s_i}^{cm} + t_{s_{i-1}}^{finish} - t_{s_{i-1}}^{cp} + t_{s_i}^{cp}$$

end if

end for

$$t_{total} = t_{s_n}^{finish} - t_{s_n}^{cp}$$

Sort $\mathcal{S}(\alpha)$ according to $t_{s_i}^{finish}$

for i=1 to n do

if $t_{s_i}^{finish} > t_{total}$ then

$$t_{total} = t_{f_i}^{finish} + t_{f_i}^{cm'}$$

else

$$t_{total} = t_{total} + t_{f_i}^{cm'}$$

end if

end for

return $t_{total}$

Based on the above algorithm 1, each candidate scheduling queue corresponding to each weight parameter may be acquired.

Based on the above algorithm 2, the total delay of the edge devices in each candidate scheduling queue may be computed. Then, the candidate scheduling queue with the minimum total delay may be acquired from the multiple candidate scheduling queues as the optimal scheduling queue.

The steps S303 to S305 may be an implementation of the step S203 in the embodiment shown in Fig. 2. The optimal scheduling queue determined with the method is quite reasonable, and the scheduling efficiency may be effectively improved.

S306: sending the global parameters of the machine learning model to the edge devices sequentially by the server based on the optimal scheduling queue of the plurality of edge devices.

That is, the global parameters of the machine learning model sent to the edge devices at this point are all the same.

S307: after receiving the global parameters of the machine learning model, training the machine learning model using the local data set by each edge device in a preset way.

The preset way in this embodiment may include a number of local iterations in the current round of training and a local batch size of each iteration, such as parameter $\tau$, $d_i$, or the like, in the above embodiments. In a local training process, the global parameters of the machine learning model may be adjusted. Since different edge devices have different local data sets, the adjusted parameters of the machine learning model may be certainly different during training. In this embodiment, in each edge device, the adjusted parameters of the machine learning model in training are referred to as local parameters.

S308: after training is finished, returning the local parameters of the trained machine learning model to the server by each edge device.

In this embodiment, uploading also has a certain rule, a channel between the server and the edge devices only supports one edge device to upload the local parameters, and when one of the edge devices occupies a channel resource to upload the local parameters, the other edge devices completing computation are required to wait for the channel resource to be free, and then may upload the local parameters.

S309: aggregating the global parameters of the machine learning model by the server based on the local parameters of the machine learning model returned by each edge device; and executing step S310.

In this embodiment, during aggregation, the server may perform aggregation by taking an average of the local parameters of each edge device, or with weighting and averaging methods, or with other mathematical computation methods, which is not limited herein.

S310: after training is finished, detecting, by each edge device, whether a local loss function is required to be returned to the server based on a preset loss function return rule; if yes, executing step S311; and if no, executing step S313.

In this embodiment, the loss function return rule may also be set in advance; for example, the local loss function may be returned to the server in each round of training, or every N rounds.

S311: after training is finished, returning the local loss function to the server by each edge device.

S312: constructing a global loss function by the server based on the local loss function returned by each edge device.

It should be noted that there is a restriction on the order of the above steps S308 to S309, there is a restriction on the order of the above steps S310 to S312, and there is no restriction on the order between the whole steps S308 to S309 and the whole steps S310 to S312, which may be performed simultaneously.

S313: detecting whether training is terminated by the server based on a preset training termination condition, and if yes, determining the global parameters of the machine learning model, and ending training. If no, the process returns to the step S301 to start the next round of training.

For example, as the training termination condition, the global loss function is always converged in consecutive preset rounds of training, or training is terminated after a preset round number threshold of training is completed. The server may detect whether the training termination condition is met after completion of each round of training, if yes, training is terminated, and if no, the next round of training is continuously performed on the machine learning model according to the whole process of the above embodiment, and the process is repeated until training is terminated.

In the federated learning (FL) protocol of this embodiment, the server sequentially transmits the global parameters of the machine learning model to the edge devices in the order of the optimal scheduling queue. The generation of the optimal scheduling queue balances the computation delay and the communication delay, and parallel computation and communication among different edge devices may be allowed; for example, in the optimal scheduling queue, the rear edge devices still receive all the parameters of the machine learning model when the front edge devices start to perform computation after receiving the global parameters of the machine learning model, such that resources of the whole distributed system are fully utilized, and the scheduling efficiency may be effectively improved.

In the distributed machine learning method according to this embodiment, by the optimal scheduling queue acquired with the above method, the accuracy and the rationality of the scheduling queue may be effectively guaranteed, thereby effectively improving the scheduling efficiency in distributed machine learning, and effectively improving the distributed machine learning efficiency. For example, in federated learning, a scheduling efficiency of the edge device in federated learning may be effectively improved, and a federated learning efficiency may be effectively improved.

Based on the technical solution of the above-mentioned embodiment of the present disclosure, the present disclosure may further provide a federated learning with parallel communication and computation (FedPCC) protocol.

In the FedPCC protocol, channel resources are not divided any longer, and the server sequentially transmits the global parameters of the machine learning model to the selected edge devices participating in training based on the optimal scheduling queue, such that parallel computation and communication among the edge devices may be allowed, and time of each round of training may be effectively reduced, thereby better using the resources of the whole system. Compared with a conventional FL protocol, in the FedPCC protocol, information obtained in a resource reporting step is used to determine the optimal scheduling queue, and the selected edge device participating in training is required to download the global parameters of the machine learning model according to the order of the edge devices defined in the optimal scheduling queue. For example, the FedPCC protocol in the present disclosure may include the following information:

1. initialization: the server initializes the global parameters of the model.
2. resource reporting: in the kth round, all the edge devices report their information to the server.
3. device selection: the server selects, randomly or with a specific method suggested in other papers, $\Pi_k$ with n edge devices to participate in a current round of tasks.

4. order determination: using the information reported by each edge device, the server determines the order of the edge devices for downloading the model in $\Pi_k$ according to certain indexes.

5. distribution: according to the downloading order, the server distributes the global parameters of the model to the selected edge devices one by one.

6. updating and uploading: the edge device starts to perform training once receiving the downloaded model parameters. After training is finished, if the communication channel is free, the local parameters of the trained model are immediately uploaded.

7. aggregation: after obtaining the local parameters updated by all the edge devices, the server averages the local parameters, and replaces a global model with an average model.

8. all steps except initialization are iterated until the global model reaches expected performance.

The above-mentioned models all refer to the machine learning model. The global model in the step 7 is replaced with the average model, which may mean that the global model is a model using the global parameters before training, and the average model is a model using averages of the local parameters updated by all the edge devices.

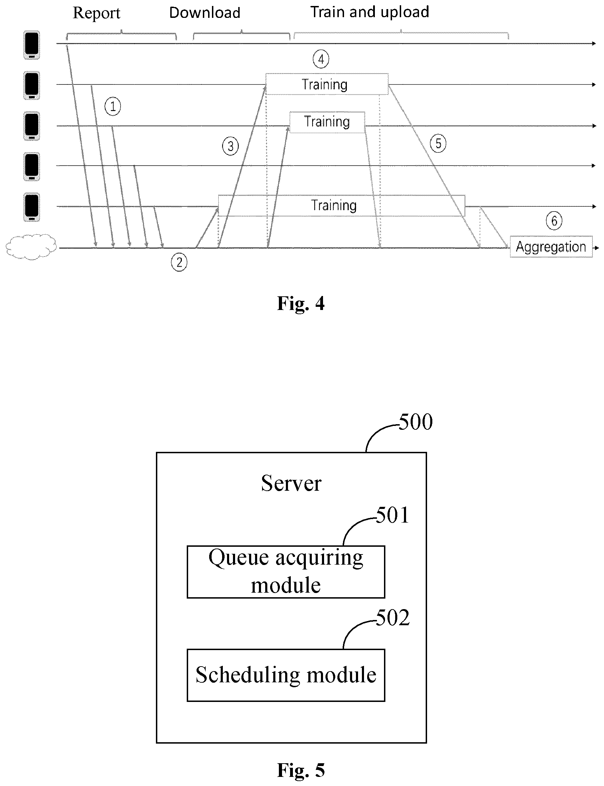

For example, Fig. 4 is a working principle diagram of a distributed system according to the present disclosure. As shown in Fig. 4, in the drawing, the device corresponding to the bottom row is a server, and the devices corresponding to the first 5 rows are edge devices. In the schematic diagram shown in Fig. 4, a work flow of the distributed system is described by taking a round of training as an example. As shown in Fig. 4, flow ① corresponds to the resource reporting step 2 in the above-mentioned FedPCC protocol, in which the edge devices report their information to the server. Flow ② corresponds to the device selection step 3 and the order determination step 4 in the above-mentioned FedPCC protocol, in which the server selects the edge devices participating in training in the current round and determines the order of the edge devices. Flow ③ corresponds to the distribution step 5 in the above-mentioned FedPCC protocol, in which according to the downloading order, the server distributes the global parameters of the model to the selected edge devices one by one. As shown in Fig. 4, flow ④ corresponds to a training process of each edge device. In this embodiment, the training edge device with the longest computation delay receives the global parameters of the model first, and the training edge device with the shortest computation delay receives the global parameters of the model last. Flow ⑤ corresponds to the uploading process in the resource reporting step 6 in the above-mentioned FedPCC protocol, in which after training is finished, if the communication channel is free, the local parameters of the trained model are immediately uploaded to the server by the edge devices. Flow ⑥ corresponds to the aggregation step 7 in the above-mentioned FedPCC protocol, in which after obtaining the local parameters updated by all the edge devices, the server averages the local parameters, and replaces the global model with the average model.

Fig. 5 is a schematic diagram according to a fourth embodiment of the present disclosure; as shown in Fig. 5, this embodiment provides a server 500, including:

a queue acquiring module 501 configured to acquire, based on delay information, an optimal scheduling queue of a plurality of edge devices participating in training; and
a scheduling module 502 configured to schedule each edge device of the plurality of edge devices to train a machine learning model based on the optimal scheduling queue of the plurality of edge devices.

The server 500 according to this embodiment has the same implementation as the above-mentioned relevant method embodiment by adopting the above-mentioned modules to implement the implementation principle and the technical effects of the distributed learning, and for details, reference may be made to the description of the above-mentioned relevant method embodiment, and details are not repeated herein.

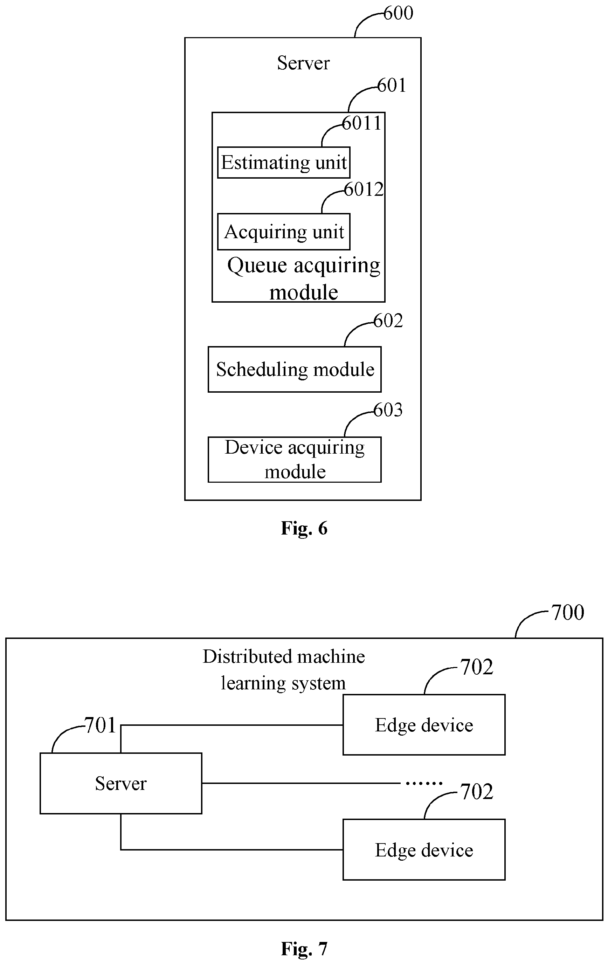

Fig. 6 is a schematic diagram according to a fifth embodiment of the present disclosure; as shown in Fig. 6, in this embodiment, a server 600 in provided, including: modules with same names and functions as those in Fig. 5 above: a queue acquiring module 601 and a scheduling module 602.

As shown in Fig. 6, in the server 600 according to this embodiment, the queue acquiring module 601 includes:

an estimating unit 6011 configured to estimate a computation delay and a communication delay of each edge device of the plurality of edge devices; and
an acquiring unit 6012 configured to acquire an optimal scheduling queue of the plurality of edge devices based on multiple preset weight parameters, and the computation delay and the communication delay of each edge device.

Further, in one embodiment of the present disclosure, the acquiring unit 6012 is configured to:

acquire a corresponding candidate scheduling queue for each weight parameter of the multiple weight parameters based on the computation delay and the communication delay of each edge device, to obtain multiple candidate scheduling queues;

compute a total delay of the edge devices in each candidate scheduling queue; and
acquire the candidate scheduling queue with the minimum total delay from the multiple candidate scheduling queues as an optimal scheduling queue, based on the total delay of the edge devices in each candidate scheduling queue.

Further, in one embodiment of the present disclosure, the acquiring unit 6012 is configured to:

for each weight parameter, compute a priority number of each edge device based on the computation delay and the communication delay of each edge device; and
ranking the identifiers of the plurality of edge devices based on the priority number of each edge device, to obtain the candidate scheduling queue corresponding to the weight parameter.

Further, in one embodiment of the present disclosure, the acquiring unit 6012 is configured to:
arrange the identifiers of the plurality of edge devices according to a descending order of the corresponding priority numbers to obtain the candidate scheduling queue corresponding to the weight parameter.

As shown in Fig. 6, in one embodiment of the present disclosure, the server 600 further includes:
a device acquiring module 603 configured to acquire an identifier of each edge device of the plurality of edge devices participating in training.

Further, in one embodiment of the present disclosure, the device acquiring module 603 is configured to:
acquire the identifier of each edge device of the plurality of edge devices participating in training according to at least one of a data resource, a computation resource, a wireless channel resource and a communication state of each edge device.

The server 600 according to this embodiment has the same implementation as the above-mentioned relevant method embodiment by adopting the above-mentioned modules to implement the implementation principle and the technical effects of the distributed learning, and for details, reference may be made to the description of the above-mentioned relevant method embodiment, and details are not repeated herein.

Fig. 7 is a schematic diagram according to a sixth embodiment of the present disclosure; as shown in Fig. 7, this embodiment provides a distributed machine learning system 700, which includes a server 701 and a plurality of edge devices 702; the server 701 is connected with each edge device 702 communicatively; the server 700 is a server as described above with reference to Fig. 5 or 6. The functions of the server according to any embodiment of Figs. 1 to 3 may be specifically adopted to implement distributed machine learning, and reference may be made to the related descriptions of the above embodiments for details, which are not repeated herein.

In the technical solution of the present disclosure, the acquisition, storage and application of involved user personal information are in compliance with relevant laws and regulations, and do not violate public order and good customs.

According to the embodiment of the present disclosure, there are also provided an electronic device, a readable storage medium and a computer program product.

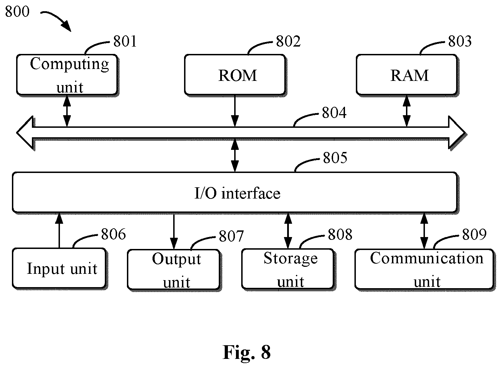

Fig. 8 shows a schematic block diagram of an exemplary electronic device 800 which may be configured to implement the embodiment of the present disclosure. The electronic device is intended to represent various forms of digital computers, such as laptop computers, desktop computers, workstations, personal digital assistants, servers, blade servers, mainframe computers, and other appropriate computers. The electronic device may also represent various forms of mobile apparatuses, such as personal digital assistants, cellular telephones, smart phones, wearable devices, and other similar computing apparatuses. The components shown herein, their connections and relationships, and their functions, are meant to be exemplary only, and are not meant to limit implementation of the present disclosure described and/or claimed herein.

As shown in Fig. 8, the device 800 includes a computing unit 801 which may perform various appropriate actions and processing operations according to a computer program stored in a read only memory (ROM) 802 or a computer program loaded from a storage unit 808 into a random access memory (RAM) 803. Various programs and data necessary for the operation of the device 800 may be also stored in the RAM 803. The computing unit 801, the ROM 802, and the RAM 803 are connected with one other through a bus 804. An input/output (I/O) interface 805 is also connected to the bus 804.

The multiple components in the device 800 are connected to the I/O interface 805, and include: an input unit 806, such as a keyboard, a mouse, or the like; an output unit 807, such as various types of displays, speakers, or the like; the storage unit 808, such as a magnetic disk, an optical disk, or the like; and a communication unit 809, such as a network card, a modem, a wireless communication transceiver, or the like. The communication unit 809 allows the device 800 to exchange information/data with other devices through a computer network, such as the Internet, and/or various telecommunication networks.

The computing unit 801 may be a variety of general and/or special purpose processing components with processing and computing capabilities. Some examples of the computing unit 801 include, but are not limited to, a central processing unit (CPU), a graphic processing unit (GPU), various dedicated artificial intelligence (AI) computing chips, various computing units running machine learning model algorithms, a digital signal processor (DSP), and any suitable processor, controller, microcontroller, or the like. The computing unit 801 performs the methods and processing operations described above, such as the method according to the present disclosure. For example, in some embodiments, the method according to the present disclosure may be implemented as a computer software program tangibly contained in a machine readable medium, such as the storage unit 808. In some embodiments, part or all of the computer program may be loaded and/or installed into the device 800 via the ROM 802 and/or the communication unit 809. When the computer program is loaded into the RAM 803 and executed by the computing unit 801, one or more steps of the method according to the present disclosure may be performed. Alternatively, in other embodiments, the computing unit 801 may be configured to perform the method according to the present disclosure by any other suitable means (for example, by means of firmware).

Various implementations of the systems and technologies described herein above may be implemented in digital electronic circuitry, integrated circuitry, field programmable gate arrays (FPGA), application specific integrated circuits (ASIC), application specific standard products (ASSP), systems on chips (SOC), complex programmable logic devices (CPLD), computer hardware, firmware, software, and/or combinations thereof. The systems and technologies may be implemented in one or more computer programs which are executable and/or interpretable on a programmable system including at least one programmable processor, and the programmable processor may be special or general, and may receive data and instructions from, and transmit data and instructions to, a storage system, at least one input apparatus, and at least one output apparatus.

Program codes for implementing the method according to the present disclosure may be written in any combination of one or more programming languages. These program codes may be provided to a processor or a controller of a general purpose computer, a special purpose computer, or other programmable data processing apparatuses, such that the program code, when executed by the processor or the controller, causes functions/operations specified in the flowchart and/or the block diagram to be implemented. The program code may be executed entirely on a machine, partly on a machine, partly on a machine as a standalone software package and partly on a remote machine, or entirely on a remote machine or a server.

In the context of the present disclosure, the machine readable medium may be a tangible medium which may contain or store a program for use by or in connection with an instruction execution system, apparatus, or device. The machine readable medium may be a machine readable signal medium or a machine readable storage medium. The machine readable medium may include, but is not limited to, an electronic, magnetic, optical, electromagnetic, infrared, or semiconductor system, apparatus, or device, or any suitable combination of the foregoing. More specific examples of the machine readable storage medium may include an electrical connection based on one or more wires, a portable computer disk, a hard disk, a random access memory (RAM), a read only memory (ROM), an erasable programmable read only memory (EPROM or flash memory), an optical fiber, a portable compact disc read only memory (CD-ROM), an optical storage device, a magnetic storage device, or any suitable combination of the foregoing.

To provide interaction with a user, the systems and technologies described here may be implemented on a computer having: a display apparatus (for example, a cathode ray tube (CRT) or liquid crystal display (LCD) monitor) for displaying information to a user; and a keyboard and a pointing apparatus (for example, a mouse or a trackball) by which a user may provide input for the computer. Other kinds of apparatuses may also be used to provide interaction with a user; for example, feedback provided for a user may be any form of sensory feedback (for example, visual feedback, auditory feedback, or tactile feedback); and input from a user may be received in any form (including acoustic, speech or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a local area network (LAN), a wide area network (WAN) and the Internet.

A computer system may include a client and a server. Generally, the client and the server are remote from each other and interact through the communication network. The relationship between the client and the server is generated by virtue of computer programs which run on respective computers and have a client-server relationship to each other. The server may be a cloud server or a server of a distributed system, or a server incorporating a blockchain.

It should be understood that various forms of the flows shown above may be used and reordered, and steps may be added or deleted. For example, the steps described in the present disclosure may be executed in parallel, sequentially, or in different orders, which is not limited herein as long as the desired results of the technical solution disclosed in the present disclosure may be achieved.

The above-mentioned implementations are not intended to limit the scope of the present disclosure. It should be understood by those skilled in the art that various modifications, combinations, subcombinations and substitutions may be made, depending on design requirements and other factors. Any modification, equivalent substitution and improvement made within the spirit and principle of the present disclosure all should be included in the extent of protection of the present disclosure.

**Claims**

1. A distributed machine learning method, comprising:

   acquiring (S101), based on delay information, an optimal scheduling queue of a plurality of edge devices participating in training; and
   scheduling (S102) each edge device of the plurality of edge devices to train a machine learning model based on the optimal scheduling queue of the plurality of edge devices.

2. The method according to claim 1, wherein the acquiring based on delay information the optimal scheduling queue of the plurality of edge devices comprises:

   estimating (S202) a computation delay and a communication delay of each edge device of the plurality of edge devices; and
   acquiring (S203) the optimal scheduling queue of the plurality of edge devices based on multiple preset weight parameters, and the computation delay and the communication delay of each edge device.

3. The method according to claim 1 or 2, wherein the acquiring (S203) the optimal scheduling queue of the plurality of edge devices based on multiple preset weight parameters, and the computation delay and the communication delay of each edge device comprises:

   acquiring (S303) a corresponding candidate scheduling queue for each weight parameter of the multiple weight parameters based on the computation delay and the communication delay of each edge device, to obtain multiple candidate scheduling queues;
   computing (S304) a total delay of the edge devices in each candidate scheduling queue; and
   acquiring (S305) the candidate scheduling queue with the minimum total delay from the multiple candidate scheduling queues as an optimal scheduling queue, based on the total delay of the edge devices in each candidate scheduling queue.

4. The method according to claim 3, wherein acquiring the corresponding candidate scheduling queue for each weight parameter of the multiple weight parameters based on the computation delay and the communication delay of each edge device comprises:

   for each weight parameter, computing a priority number of each edge device based on the computation delay and the communication delay of each edge device; and
   ranking the identifiers of the plurality of edge devices based on the priority number of each edge device, to obtain the candidate scheduling queue corresponding to the weight parameter.

5. The method according to claim 4, wherein ranking the identifiers of the plurality of edge devices based on the priority number of each edge device, to obtain the candidate scheduling queue corresponding to the weight parameter comprises:
   arranging the identifiers of the plurality of edge devices according to a descending order of the corresponding priority numbers to obtain the candidate scheduling queue corresponding to the weight parameter.

6. The method according to any one of claims 1 to 5, further comprising:
   before the acquiring based on delay information the optimal scheduling queue of plurality of edge devices participating in training, acquiring (S201) an identifier of each edge device of the plurality of edge devices participating in training.

7. The method according to claim 6, wherein the acquiring the identifier of each edge device of the plurality of edge devices participating in training comprises:
   acquiring (S301) the identifier of each edge device of the plurality of edge devices participating in training according to at least one of a data resource, a computation resource, a wireless channel resource and a communication state of each edge device.

8.  A server (500, 600, 701), comprising:

    a queue acquiring module (501, 601) configured to acquire (S101), based on delay information, an optimal scheduling queue of a plurality of edge devices participating in training; and
    a scheduling module (502, 602) configured to schedule (S102) each edge device of the plurality of edge devices to train a machine learning model based on the optimal scheduling queue of the plurality of edge devices.

9.  The server (500, 600, 701) according to claim 8, wherein the queue acquiring module (600) comprises:

    an estimating unit (6011) configured to estimate (S202) a computation delay and a communication delay of each edge device of the plurality of edge devices; and
    an acquiring unit (6012) configured to acquire (S203) the optimal scheduling queue of the plurality of edge devices based on multiple preset weight parameters, and the computation delay and the communication delay of each edge device.

10. The server (500, 600, 701) according to claim 8 or 9, wherein the acquiring unit (6012) is configured to:

    acquire (S303) a corresponding candidate scheduling queue for each weight parameter of the multiple weight parameters based on the computation delay and the communication delay of each edge device, to obtain multiple candidate scheduling queues;
    compute (S304) a total delay of the edge devices in each candidate scheduling queue; and
    acquire (S305) the candidate scheduling queue with the minimum total delay from the multiple candidate scheduling queues as an optimal scheduling queue, based on the total delay of the edge devices in each candidate scheduling queue,.

11. The server (500, 600, 701) according to claim 10, wherein the acquiring unit (6012) is configured to:

    for each weight parameter, compute a priority number of each edge device based on the computation delay and the communication delay of each edge device; and
    ranking the identifiers of the plurality of edge devices based on the priority number of each edge device, to obtain the candidate scheduling queue corresponding to the weight parameter.

12. A distributed machine learning system (700), comprising a server (701) and a plurality of edge devices (702); the server (701) being connected with each edge device (702) communicatively; and the server (701) being the server (701) according to any one of claims 8 to 11.

13. An electronic device, comprising:

    at least one processor; and
    a memory connected with the at least one processor communicatively;
    wherein the memory stores instructions executable by the at least one processor to cause the at least one processor to perform the method according to any one of claims 1 to 7.

14. A non-transitory computer readable storage medium with computer instructions stored thereon, wherein the computer instructions are used for causing a computer to perform the method according to any one of claims 1 to 7.

15. A computer program product comprising a computer program which, when executed by a processor, implements the method according to any one of claims 1 to 7.

S101

acquiring, based on delay information, an optimal
scheduling queue of a plurality of edge devices
participating in training

S102

scheduling each edge device of the plurality of edge
devices to train a machine learning model based on the
optimal scheduling queue of the plurality of edge
devices

**Fig. 1**

S201

acquiring an identifier of each edge device of the
plurality of edge devices participating in training

S202

estimating a computation delay and a communication
delay of each edge device of the plurality of edge
devices

S203

acquiring the optimal scheduling queue of the plurality
of edge devices based on multiple preset weight
parameters, and the computation delay and the
communication delay of each edge device

S204

scheduling each edge device of the plurality of edge
devices to train a machine learning model based on the
optimal scheduling queue of the plurality of edge
devices

**Fig. 2**

S301

in a current round of training, acquiring, by a server, an identifier of each edge device of a plurality of edge devices participating in training according to at least one of a data resource, a computation resource, a wireless channel resource and a communication state of each edge device

S302

estimating a computation delay and a communication delay of each edge device of the plurality of edge devices by the server

S303

for each of multiple weight parameters, acquiring, by the server, a corresponding candidate scheduling queue based on the computation delay and the communication delay of each edge device to obtain multiple candidate scheduling queues

S304

computing a total delay of the edge devices in each candidate scheduling queue by the server

S305

acquiring, by the server, the candidate scheduling queue with the minimum total delay from the multiple candidate scheduling queues as an optimal scheduling queue, based on the total delay of the edge devices in each candidate scheduling queue

S306

sending the global parameters of the machine learning model to the edge devices sequentially by the server based on the optimal scheduling queue of the plurality of edge devices

S307

after receiving the global parameters of the machine learning model, training the machine learning model using the local data set by each edge device in a preset way

S308

after training is finished, returning the local parameters of the trained machine learning model to the server by each edge device

S309

aggregating the global parameters of the machine learning model by the server based on the local parameters of the machine learning model returned by each edge device

S310

after training is finished, detecting, by each edge device, whether a local loss function is required to be returned to the server based on a preset loss function return rule

No

Yes

S311

after training is finished, returning the local loss function to the server by each edge device

S312

constructing a global loss function by the server based on the local loss function returned by each edge device

S313

detecting whether training is terminated by the server based on a preset training termination condition

No

Yes

determining the global parameters of the machine learning model, and ending training

**Fig. 3**

EP 4 202 680 A1

**Fig. 4**

**Fig. 5**

21

**Fig. 6**

**Fig. 7**

800

Computing unit — 801    ROM — 802    RAM — 803

— 804

— 805

I/O interface

Input unit — 806    Output unit — 807    Storage unit — 808    Communication unit — 809

**Fig. 8**

Europäisches Patentamt
European Patent Office
Office européen des brevets

**EUROPEAN SEARCH REPORT**

Application Number

EP 22 21 4447

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JI LIU ET AL: "HeterPS: Distributed Deep Learning With Reinforcement Learning Based Scheduling in Heterogeneous Environments", ARXIV.ORG, CORNELL UNIVERSITY LIBRARY, 201 OLIN LIBRARY CORNELL UNIVERSITY ITHACA, NY 14853, 20 November 2021 (2021-11-20), XP091102058, * the whole document * | 1-15 | INV. G06F9/50 G06N3/098 |
| X | ZHOU CHENDI ET AL: "Efficient Device Scheduling with Multi-Job Federated Learning", PROCEEDINGS OF THE AAAI CONFERENCE ON ARTIFICIAL INTELLIGENCE, vol. 36, no. 9, 15 December 2021 (2021-12-15), pages 9971-9979, XP093038196, ISSN: 2159-5399, DOI: 10.1609/aaai.v36i9.21235 Retrieved from the Internet: URL:https://arxiv.org/pdf/2112.05928.pdf> * the whole document * | 1-15 | |
| X | ZHOU CHENDI CDZHOUCDZHOU@STU SUDA EDU CN ET AL: "TEA-fed time-efficient asynchronous federated learning for edge computing", PROCEEDINGS OF THE 42ND ACM SIGPLAN INTERNATIONAL CONFERENCE ON PROGRAMMING LANGUAGE DESIGN AND IMPLEMENTATION, ACMPUB27, NEW YORK, NY, USA, 11 May 2021 (2021-05-11), pages 30-37, XP058758985, DOI: 10.1145/3457388.3458655 ISBN: 978-1-4503-8434-6 * the whole document * | 1-15 | |

TECHNICAL FIELDS SEARCHED (IPC)

G06F
G06N

-/--

The present search report has been drawn up for all claims

| Place of search | Date of completion of the search | Examiner |
|---|---|---|
| The Hague | 12 April 2023 | Dewyn, Torkild |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 22 21 4447

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JI LIU ET AL: "Data Placement for Multi-Tenant Data Federation on the Cloud", ARXIV.ORG, CORNELL UNIVERSITY LIBRARY, 201 OLIN LIBRARY CORNELL UNIVERSITY ITHACA, NY 14853, 15 December 2021 (2021-12-15), XP091121041, * the whole document * | 1-15 | |

TECHNICAL FIELDS
SEARCHED      (IPC)

The present search report has been drawn up for all claims

| Place of search | Date of completion of the search | Examiner |
|---|---|---|
| The Hague | 12 April 2023 | Dewyn, Torkild |

EPO FORM 1503 03.82 (P04C01)